# EUROPEAN PATENT APPLICATION

(11) **EP 2 939 800 A1**
(43) Date of publication of application: **04.11.2015**
(21) Application number: 13869107.6
(22) Date of filing: 14.11.2013
(51) Int. Cl.: B25J 17/00, B25J 9/08

(54) **MANIPULATOR**

(30) Priority: 28.12.2012 JP 2012288001
(71) Applicant: Namiki Seimitu Houseki Kabushiki Kaisha, Adachi-ku Tokyo 123-8511 (JP)
(72) Inventor: SATO Norikazu, Kuroishi-shi Aomori 036-0539 (JP)
(74) Representative: Schäfer, Matthias W.
(86) International application number: PCT/JP2013/080809
(87) International publication number: WO 2014/103550

(57) **Abstract**

Provided is a manipulator that has a simple structure, is capable of high precision control, and is highly durable. The manipulator includes: a first arm 10; an intermediate member 30 rotatably supported on one end side of the first arm 10; a second arm 20 supported on the intermediate member 30; a feed screw mechanism 40, a base end side of which is supported by the first arm 10 and a rod 42 on a tip side of which is engaged with a portion of the intermediate member 30 near a rotation fulcrum of the first arm 10. The rod 42 of the feed screw mechanism 40 is advanced/retracted so as to rotate the intermediate member 30 with respect to the first arm 10.

## Description

### TECHNICAL FIELD

The present invention relates to a manipulator used for an industrial robot, a medical robot, or another type of robot.

### BACKGROUND ART

Conventionally, the invention of this type has been known to include: a finger (14) capable of bending and stretching motion; a tendon (50) in a flexible string shape, one end side of which is fixed to this finger; and a linear actuator (48) for pulling the other end side of this tendon, in which the linear actuator (48) pulls and bends the finger (14), as disclosed in Patent Document 1.

In the above conventional art, the tendon (50) in the flexible string shape is pulled to bend the finger (14). Thus, in order to bend the finger (14) in a reverse direction, another pair or more of the tendon and the linear actuator, a spring, or the like is required, and this causes complication of a mechanism.

In addition, with a mechanism of pulling the tendon (50), an angle defined upon bending of the finger (14) may fluctuate due to fluctuations in a degree of stretching of the tendon (50). Furthermore, due to a tensile load that is repeatedly applied to the tendon (50), the tendon (50) may be fully stretched or ruptured. In particular, when a use period is relatively long, these problems tend to become more apparent due to the stretching, deterioration by aging, or the like.

### CITATION LIST

### PATENT DOCUMENT

Patent Document 1: JP-A-2012-152889

### SUMMARY OF THE INVENTION

### PROBLEMS TO BE SOLVED BY THE INVENTION

The present invention has been made in view of the above conventional circumstances. An object of the present invention is to provide a manipulator that has a simple structure, is capable of high precision control, and is highly durable.

### SOLUTIONS TO THE PROBLEMS

A means for solving the above problem includes: a first arm; an intermediate member rotatably supported on one end side of the first arm; a second arm supported on the intermediate member; and a feed screw mechanism, a base end of which is supported by the first arm, and a rod on a tip side of which is engaged with a portion of the intermediate member near a rotation fulcrum of the first arm, in which the rod of the feed screw mechanism is advanced/retracted so as to rotate the intermediate member with respect to the first arm.

### EFFECTS OF THE INVENTION

Due to the configuration as described above, the present invention has a simple structure, is capable of high precision control, and is highly durable.

### BRIEF DESCRIPTION OF THE DRAWINGS

Fig. 1 is a perspective view of one example of a manipulator according to the invention.
Fig. 2 is a perspective view of another bending aspect of the manipulator.
Fig. 3 is a perspective view of main sections of the manipulator.
Fig. 4 is a perspective view of the main sections of the manipulator, in which one arm is represented by a two-dot chain line, and the inside of which can be seen.
Fig. 5 is a perspective view of the main sections of the manipulator, in which the one arm is represented by a two-dot chain line, and the inside of which can be seen.
Fig. 6 is a perspective view of the main sections of the manipulator, in which both arms are represented by two-dot chain lines, and the inside of which can be seen.
Fig. 7 is a vertical cross-sectional view that is taken along (VII) - (VII) line in Fig. 6.
Fig. 8 is a transverse cross-sectional view of the main sections of the manipulator and depicts a state that an intermediate member is removed.
Fig. 9A is a perspective view of the main sections of the manipulator, in which (a) depicts a state that a second arm rotates in one direction.
Fig. 9B is a perspective view of the main sections of the manipulator, in which (b) depicts a state that the second arm is linearly arranged with a first arm.
Fig. 9C is a perspective view of the main sections of the manipulator, in which (c) depicts a state that the second arm rotates in another direction.

### DESCRIPTION OF EMBODIMENTS

A first feature of this embodiment is to include: a first arm; an intermediate member rotatably supported on one end side of the first arm; a second arm supported on the intermediate member; and a feed screw mechanism, a base end of which is supported by the first arm, and a rod on a tip side of which is engaged with a portion of the intermediate member near a rotation fulcrum of the first arm, and that the rod of the feed screw mechanism is advanced/retracted so as to rotate the intermediate member with respect to the first arm.

According to this configuration, when the rod of the feed screw mechanism is advanced, the intermediate member rotates with respect to the first arm in one direction, and the second arm also rotates in the one direction in conjunction with this rotation. In addition, when the rod is retracted, the intermediate member rotates with respect to the first arm in the other direction, and the second arm also rotates in a reverse direction from the one direction in conjunction with this rotation.

A second feature is to include a second feed screw mechanism that supports the second arm to cause rotation thereof with respect to the intermediate member in a direction to cross a rotational direction of the first arm, is supported by the second arm, and engages a rod that can be advanced/retracted with a portion of the intermediate member near a rotation fulcrum of the second arm, in which the rod of the second feed screw mechanism is advanced/retracted so as to rotate the intermediate member with respect to the second arm.

According to this configuration, when the rod of the second feed screw mechanism is advanced/retracted, the second arm opposes and rotates with respect to the intermediate member. A rotational direction at this time is a direction to cross a direction in which the first arm opposes and rotates with respect to the intermediate member.

As a third feature, an elongated hole is provided in one of the rod and the intermediate member such that an engaged portion of the rod with the intermediate member relatively approaches/separates from the rotation fulcrum in conjunction with advancement/retraction of the rod, and the other of the rod and the intermediate member is provided with a freely movable shaft within the elongated hole.

According to this configuration, when the rod of the feed screw mechanism is advanced/retracted and intermediate member rotates, an engaged portion of the rod with the intermediate member relatively approaches/separates from the rotation fulcrum of circular motion of the intermediate member due to the circular motion thereof. However, the shaft on the rod side or the intermediate member side freely moves within the elongated hole on the other side, and thus advancing/retracting movement of the rod is not distracted.

As a fourth feature, each of the first arm and the second arm is formed in a hollow shape and supports the feed screw mechanism therein.

According to this configuration, it is possible to prevent a projection or a recess from being formed on the outside of the manipulator due to exposure of the feed screw mechanism or the like to the outside of the first arm, the intermediate member, and the second arm. As a result, unnecessary interference of the manipulator with an object other than a work object can be prevented. Thus, the invention is particularly suitable to be applied to a low-invasive robot that is inserted into a human body.

As a fifth feature, the feed screw mechanism is configured to advance/retract the rod by electric power supplied from an electric wire, and the electric wire is inserted through the first arm, the intermediate member, and the second arm.

According to this configuration, it is possible to prevent the electric wire from being exposed to the outside of the manipulator. As a result, unnecessary interference of the electric wire with the object other than the work object can be prevented.

As a sixth feature, a sensing section for sensing rotation of the intermediate member that opposes the first arm or the second arm is provided.

According to this configuration, the rotation of the intermediate member with respect to the first arm or the second arm can easily be sensed.

Next, a detailed description will be made on a preferred specific example of the above aspect with reference to the drawings.

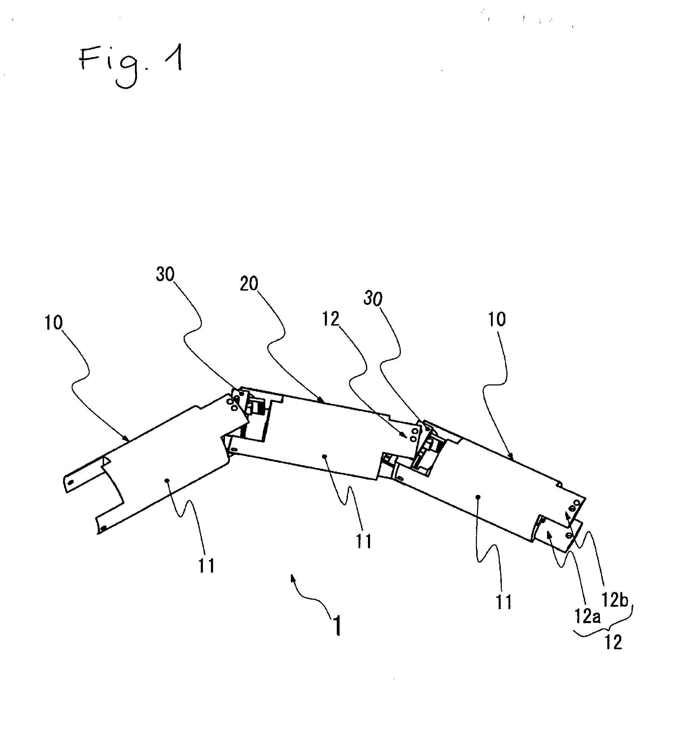

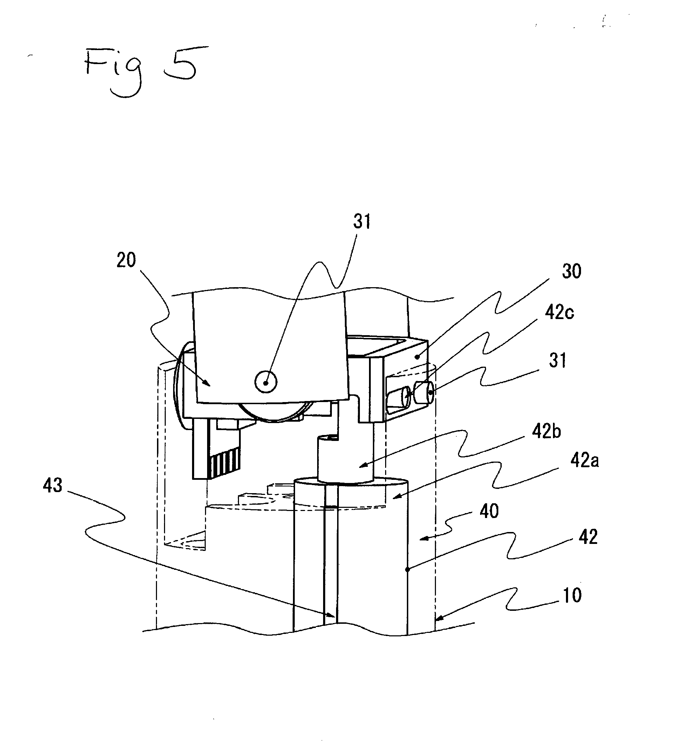

As illustrated in Figs. 1 to 9C, this manipulator 1 is equipped with: first arms 10 and second arms 20 that are in hollow shapes and alternately arranged; an intermediate member 30 that rotatably connects the adjacent first arm 10 and second arm 20; a first feed screw mechanism 40 supported in the first arm 10; a second feed screw mechanism 50 supported in the second arm 20; a first sensing section 60 that senses rotation of the intermediate member 30 with respect to the first arm 10; and a second sensing section 70 that senses rotation of the intermediate member 30 with respect to the second arm 20.

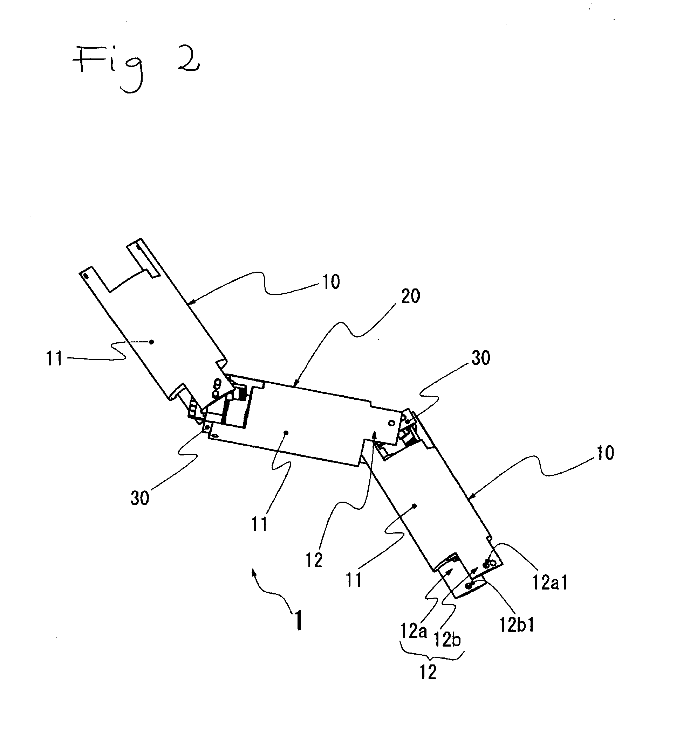

The first arm 10 and the second arm 20 are substantially cylindrical members in an identical shape and alternately arranged in an axial direction (see Figs. 1 and 2).

The first arm 10 is formed of an arm main body 11 and connected sections 12 respectively connected to one end side and the other end side of the arm main body 11 in the axial direction and in a substantially integrated cylindrical shape.

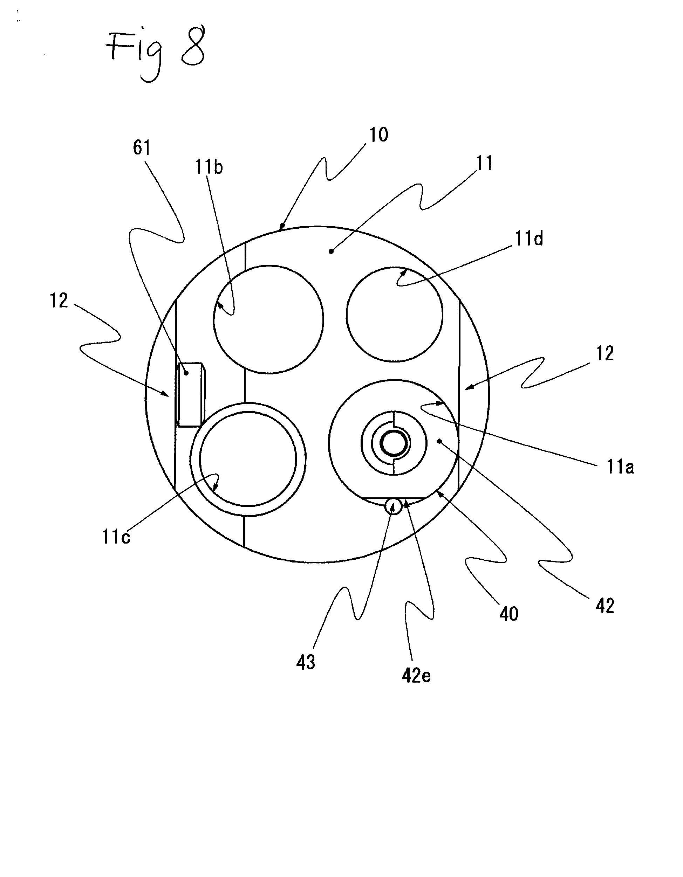

As illustrated in Fig. 8, the arm main body 11 is formed in a substantially columnar shape and has plural (four in the illustrated example) hollow sections 11a, 11b, 11c, 11d that continue and penetrate in the axial direction therein.

The first feed screw mechanism 40 is inserted in and supported by the hollow section 11 a of these.

In addition, when the arm main body 11 becomes a part of the second arm 20, the second feed screw mechanism 50 is inserted in and supported by the hollow section 11b that has the same diameter as the hollow section 11a.

An electric wire for supplying electric power to the first feed screw mechanism 40 and the second feed screw mechanism 50, an electric wire for transmitting signals of the first sensing section 60 and the second sensing section 70, and the like are inserted in the other hollow sections 11 c, 11d, each of which has a smaller inner diameter than the hollow sections 11 a, 11b.

The connected section 12 is axially projected from each of the one end and the other end of the arm main body 11, and is formed of one piece 12a and the other piece 12b that are arranged with a space being interposed therebetween in a radial direction.

The one piece 12a and the other piece 12b on the one end side of the first arm 10 are arranged in a state of being rotated by an angle of 90° in a circumferential direction with respect to the one piece 12a and the other piece 12b on the other side of the first arm 10.

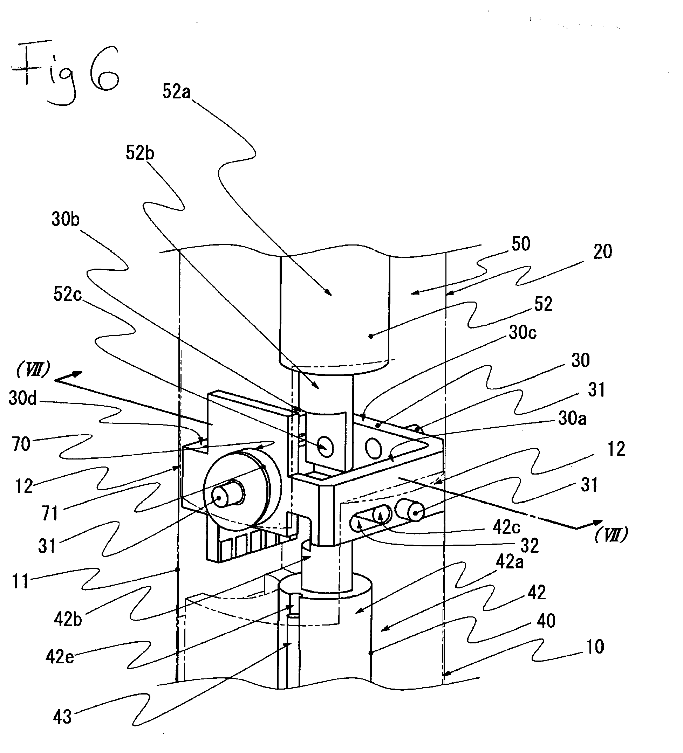

The one piece 12a and the other piece 12b are respectively provided with shaft holes 12a1, 12b1. Then, a support shaft 31 (see Fig. 6) of the intermediate member 30, which will be described below, is inserted in each of the shaft holes 12a1, 12b1 in a freely rotatable manner.

As described above, the second arm 20 has the identical shape as the first arm 10. Thus, main sections of this second arm 20 are denoted by the same reference signs as in the case of the first arm 10, and the overlapping detailed description will be omitted.

In addition, the intermediate member 30 is connected to the connected section 12 in the first arm 10 or the second arm 20 in a freely rotatable manner.

This intermediate member 30 is formed of: a first side section 30a and a second side section 30b that oppose each other with a space being interposed therebetween in the radial direction; and a third side section 30c and a fourth side section 30d that are orthogonal to these side sections and oppose each other with a space being interposed therebetween in the radial direction, and in a rectangular frame shape (see Fig. 6).

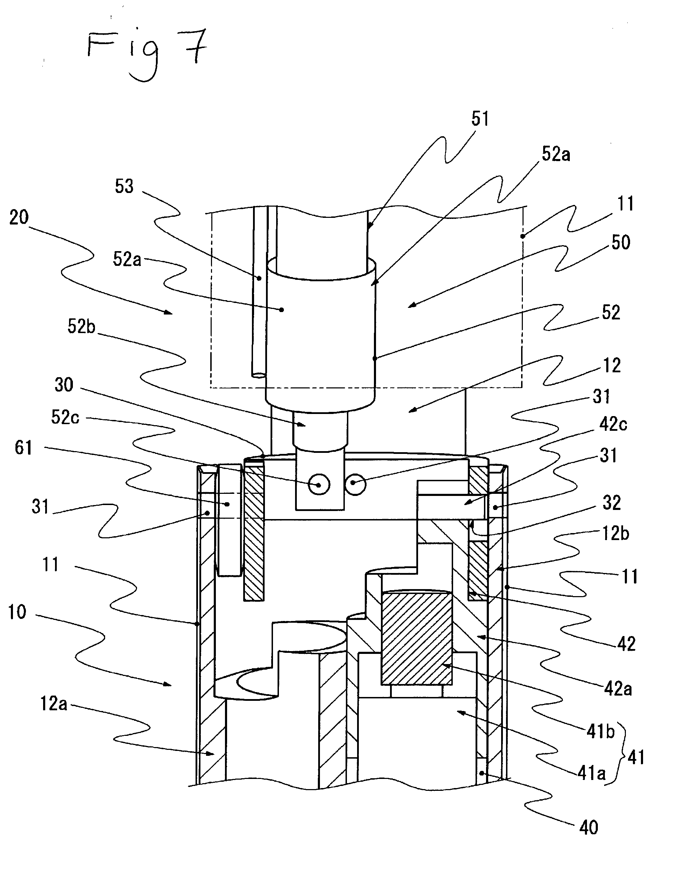

The support shaft 31 (see Figs. 6 and 7) that is projected to the radial outside is provided in each of the first side section 30a and the second side section 30b. Furthermore, the first side section 30a has an elongated hole 32 that is engaged with a rod 42 of the first feed screw mechanism 40, which will be described below.

Similarly, the support shaft 31 that is projected to the radial outside is provided in each of the third side section 30c and the fourth side section 30d. Furthermore, the third side section 30c has an elongated hole (not illustrated) that is engaged with a rod 52 of the second feed screw mechanism 50, which will be described below.

The support shafts 31 of the first side section 30a and the second side section 30b are respectively inserted through the one piece 12a and the other piece 12b of the connected section 12 in the first arm 10 and support the intermediate member 30 in the freely rotatable manner with respect to the first arm 10 (see Fig. 6 and Fig. 7).

Similarly, the support shafts 31 of the third side section 30c and the fourth side section 30d are respectively inserted through the one piece 12a and the other piece 12b of the connected section 12 in the second arm 20 and support the intermediate member 30 in the freely rotatable manner with respect to the second arm 20.

It should be noted that a rotational direction of the intermediate member 30 with respect to the first arm 10 is orthogonal to a rotational direction of the intermediate member 30 with respect to the second arm 20.

In addition, the elongated hole 32 of the first side section 30a is arranged near the support shaft 31 that serves as a rotation fulcrum of the first arm 10, and is formed to be elongated in a direction to approach/separate from the support shaft 31.

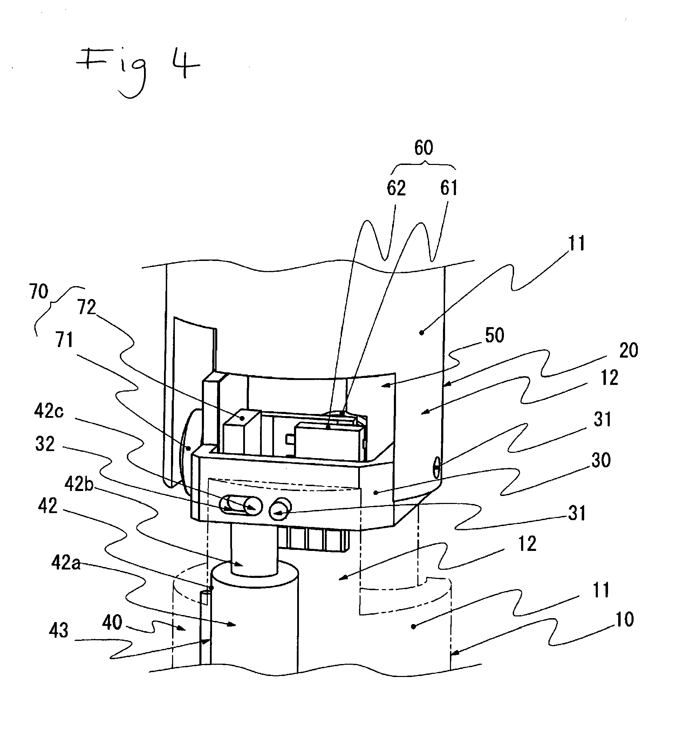

Similar to the elongated hole 32, the elongated hole (not illustrated) of the third side section 30c is also arranged near the support shaft 31 that serves as a rotation fulcrum of the second arm 20, and is formed to be elongated in a direction to approach/separate from the support shaft 31 (see Figs. 4 and 6).

Meanwhile, the first feed screw mechanism 40 is equipped with a rotational drive section 41 on a base end side and the rod 42 that is advanced/retracted by rotational motion of the rotational drive section 41. The rotational drive section 41 is supported by the first arm 10 in an immobile manner, and the rod 42 is engaged with a portion of the intermediate member 30 near the rotation fulcrum (the support shaft 31).

The rotational drive section 41 is a drive motor of a rotational type having: a main body 41 a that is unrotatably supported with respect to the first arm 10; and an output shaft 41b that is projected to the front from the main body 41a, and is constructed of a brushless DC motor of an inner rotor type or another type of actuator, for example.

The main body 41 a is equipped with, in a cylindrical casing thereof, a stator, a rotor, a gear that appropriately adjusts a rotational speed of the rotor and transmits the rotation to the output shaft 41b, and the like.

The output shaft 41b is configured to rotate bidirectionally by a rotational force of the rotor on the main body 41 a side and has a male screw on an outer circumferential surface on a tip side thereof. This male screw is screwed to the rod 42, which will be described below.

In the thus-configured rotational drive section 41, the main body 41 a is unrotatably fixed in the first arm 10 in a state that the output shaft 41b is projected to the front on the inside and outside of the hollow section 11 a in the first arm 10.

A rotation locking member 43 is a member that is interposed between the hollow section 11a of the main body 41 a and the rod 42 and unrotatably holds the rod 42 (see Fig. 8).

When described in detail, this rotation locking member 43 is a member in a columnar shaft shape and fitted to the first arm 10, and a portion of an outer circumferential surface thereof is projected into the hollow section 11a. Meanwhile, a flat section 42e is formed in a portion of an outer circumferential surface of the rod 42 in the circumferential direction. The flat section 42e is brought into contact with the outer circumferential surface of the rotation locking member 43, and in this way, the rod 42 is held in the hollow section 11 a in an unrotatable manner and in a manner capable of being advanced/retracted.

The rod 42 is integrally equipped with: a guide cylinder section 42a in a cylindrical shape; a female screw 42b that is connected to a front side of the guide cylinder section 42a; and an engagement shaft 42c that is engaged with the intermediate member 30 on a forward side of the female screw 42b.

The guide cylinder section 42a is fitted between an outer circumferential surface of the main body 41a of the rotational drive section 41 and an inner circumferential surface of the hollow section 11a of the first arm 10 so as to be advanced/retracted.

The female screw 42b is screwed to the male screw on the outer circumference of the output shaft 41b of the rotational drive section 41.

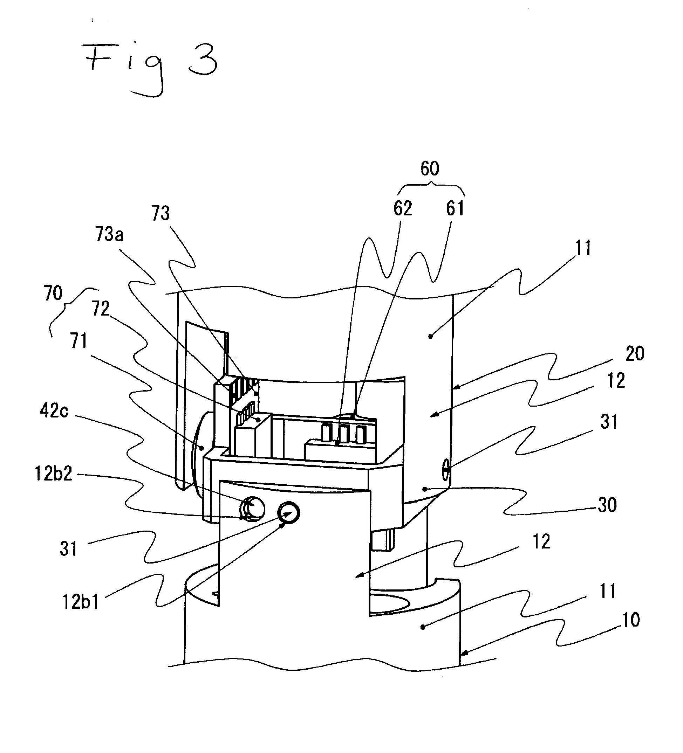

The engagement shaft 42c is a shaft that is projected in a direction orthogonal to the axial direction (a vertical direction in Fig. 7) of the rod 42 and fitted to the elongated hole 32 of the intermediate member 30. It should be noted that, in the illustrated example, this engagement shaft 42c is inserted through a through hole 12b2 (see Fig. 3) that is formed in the connected section 12 in the first arm 10, and is press-fitted to a tip side of the rod 42.

As illustrated in Fig. 6 and Fig. 7, the second feed screw mechanism 50 is constructed of a rotational drive section 51 on a base end side and a rod 52 that is advanced or retracted by rotational motion of the rotational drive section 51. Structures of these are identical to those of the first feed screw mechanism 40. The rotational drive section 51 is constructed of a main body (not illustrated) and an output shaft (not illustrated), and the rod 52 is constructed of a guide cylinder section 52a, a female screw 52b, an engagement shaft 52c, and the like.

Then, in this second feed screw mechanism 50, the rotational drive section 51 is supported in the second arm 20, and similar to the case of the first feed screw mechanism 40, the rod 52 that is projected to the first arm 10 side is engaged with an elongated hole (not illustrated) near the rotation fulcrum of the second arm 20 in the intermediate member 30.

It should be noted that the reference sign 53 in Fig. 7 denotes a rotation locking member that makes the rod 52 unrotatable and capable of being advanced/retracted. A structure of this rotation locking member 53 is similar to that of the rotation locking member 43 on the first arm 10 side.

The first sensing section 60 is equipped with: a magnet 61 that is fixed on the first arm 10 side; and a Hall sensor 62 that is fixed to the intermediate member 30 side and outputs an electrical signal that corresponds to a change in a magnetic field by the magnet 61. According to this first sensing section 60, a rotational angle of the intermediate member 30 with respect to the first arm 10 can be detected by the electrical signal.

Similarly, the second sensing section 70 is equipped with: a magnet 71 that is fixed on the second arm 20 side; and a Hall sensor 72 that is fixed to the intermediate member 30 side and outputs an electrical signal that corresponds to a change in a magnetic field by the magnet 71. According to this second sensing section 70, a rotational angle of the intermediate member 30 with respect to the second arm 20 can be detected by the electrical signal. It should be noted that, in Fig. 3, the reference sign 73 denotes an electronic circuit board on which the Hall sensor 72 is disposed and the reference sign 73a denotes a terminal that outputs a sensed signal by the Hall sensor 72.

The electric wire for supplying the electric power to each of the first feed screw mechanism 40 and the second feed screw mechanism 50, the electric wire for outputting the electrical signals of the Hall sensors 62, 72, and the like are inserted through the manipulator 1 that is configured as described above, and these electric wires are connected to an external controller, which is not illustrated.

Next, a detailed description will be made on operational effects of the manipulator 1 that is configured as described above.

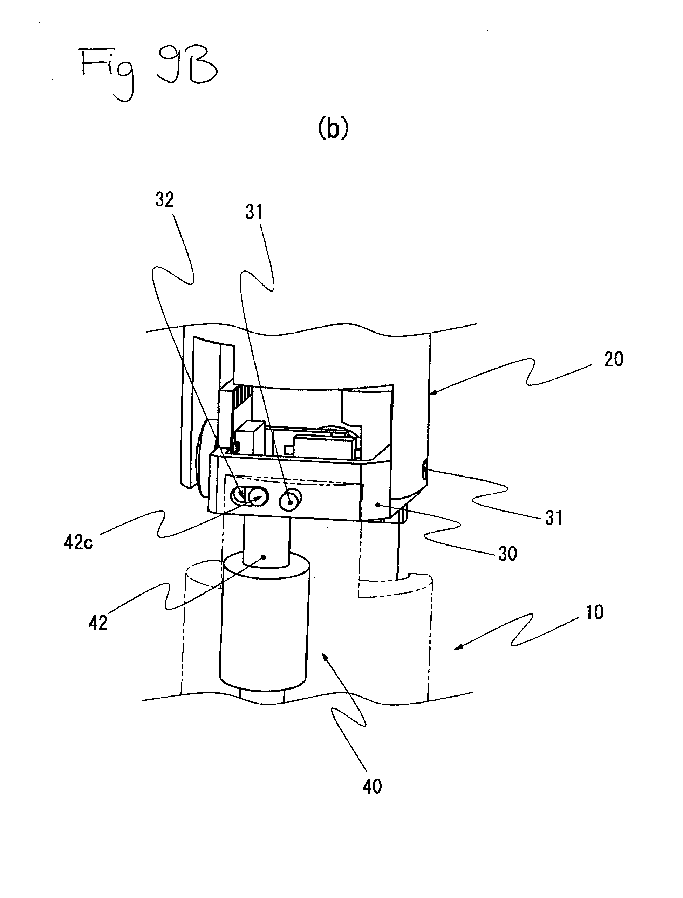

First, as illustrated in Fig. 9B(b), in a state that the first arm 10 and the second arm 20 are positioned linearly, the engagement shaft 42c on the tip side of the rod 42 of the first feed screw mechanism 40 in the elongated hole 32 of the intermediate member 30 is brought into the nearest state to the rotation fulcrum of the first arm 10 (the support shaft 31).

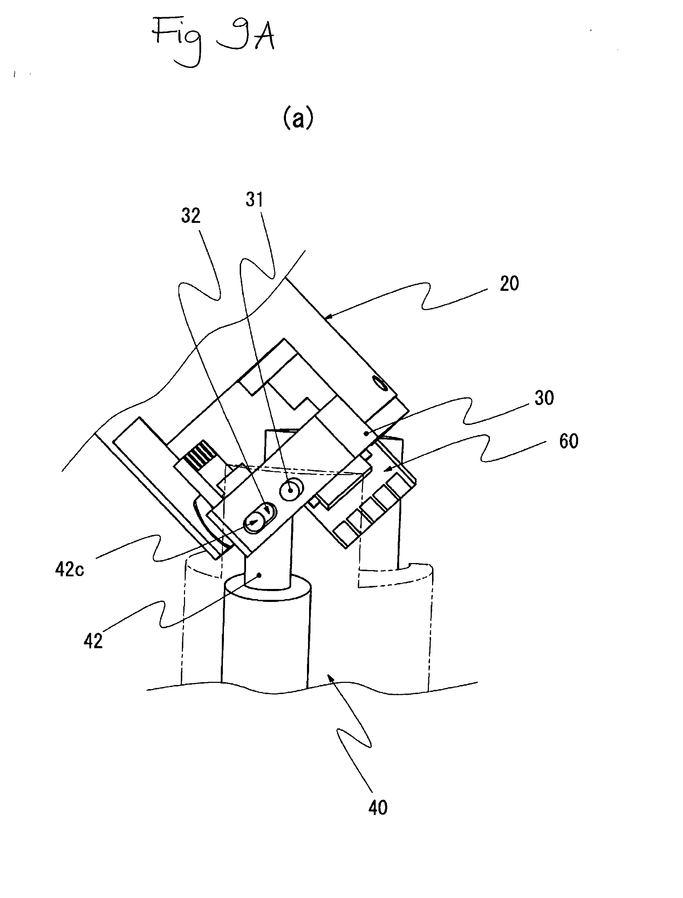

In the case where the rod 42 of the first feed screw mechanism 40 is retracted from the state illustrated in Fig. 9B(b), the intermediate member 30 is pulled by the rod 42, and, as illustrated in Fig. 9B(b), the intermediate member 30 and the second arm 20 rotate about the rotation fulcrum (the support shaft 31) in one direction (counterclockwise in Fig. 9A).

Upon this rotation, the engagement shaft 42c of the rod 42 moves within the elongated hole 32 in a direction to separate from the rotation fulcrum (the support shaft 31). The rotational angle of the intermediate member 30 and the second arm 20 is detected by the first sensing section 60.

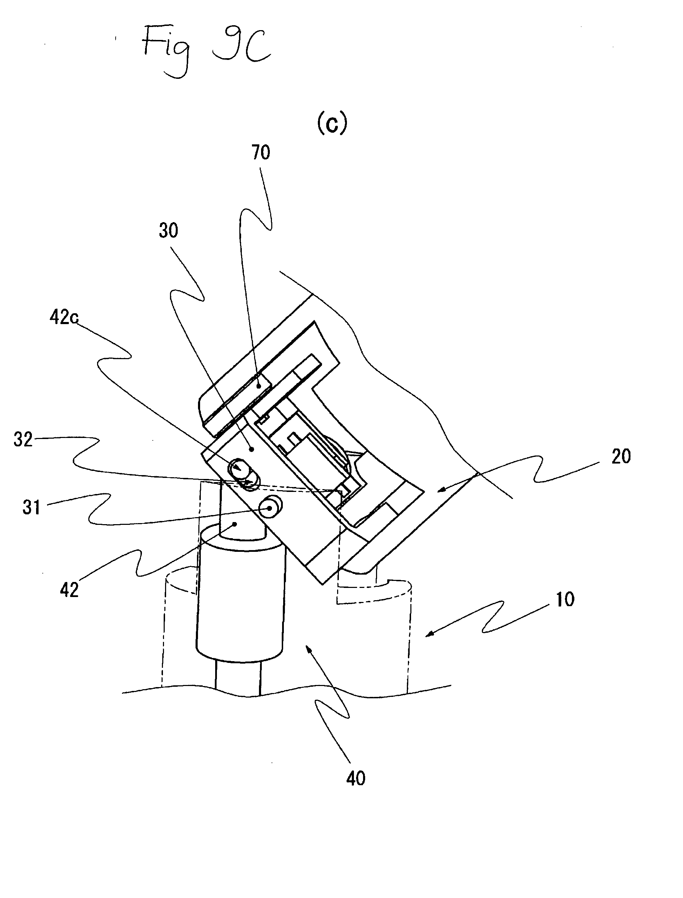

On the contrary, in the case where the rod 42 of the first feed screw mechanism 40 is advanced from the state illustrated in Fig. 9B(b), the intermediate member 30 is pushed by the rod 42. Accordingly, as illustrated in Fig. 9C(c), the intermediate member 30 and the second arm 20 rotate about the rotation fulcrum (the support shaft 31) in the other direction (clockwise in Fig. 9C).

Upon this rotation, the engagement shaft 42c of the rod 42 moves within the elongated hole 32 in the direction to separate from the rotation fulcrum (the support shaft 31). In addition, the rotational angle of the intermediate member 30 and the second arm 20 is detected by the first sensing section 60.

In the case where the second arm 20 rotates with respect to the intermediate member 30 in a direction orthogonal to the rotational directions (the rotational directions indicated in Figs. 9A and 9C), although not illustrated, the second feed screw mechanism 50 in the second arm 20 needs to be operated. A rotational direction of the second arm 20 at this time is a direction orthogonal to a rotational direction of the first arm 10 that opposes the intermediate member 30. In addition, a rotational angle at this time is detected by the second sensing section 70.

Thus, according to the manipulator 1 of this embodiment, a joint between the first arm 10 and the second arm 20 can freely be bent and stretched by controlling the first feed screw mechanism 40 and the second feed screw mechanism 50.

Accordingly, when the plural first feed screw mechanisms 40 and the plural second feed screw mechanisms 50 are independently driven, the plural joints can independently be bent and stretched. For example, various patterns of bending and stretching motion are possible, such as bending some of the joints in the same direction, bending some of the joints in a different direction from the rest of the joints.

Furthermore, compared to the conventional art that uses the plural tendons, degradation of motion precision that is caused by stretching or deterioration of each component is less likely to occur, the structure is simple, and durability is high.

Moreover, since there is no projected portion on the peripheries of the first arm 10 and the second arm 20, unnecessary interference of the first arm 10 and the second arm 20 with an object other than a work object can be prevented. Thus, the invention is particularly suitable to be applied to a low-invasive robot that is inserted into a human body.

It should be noted that a total of seven of the first arms 10 and the second arms 20 are alternately arranged and coupled in a longitudinal direction in the illustrated example. However, in another example, the coupling number thereof can appropriately be changed.

In the illustrated example, both of the first arm 10 and the second arm 20 are rotatably supported with respect to the intermediate member 30. However, as another example, only one of the first arm 10 and the second arm 20 can rotatably be supported with respect to the intermediate member 30, and the other can be fixed unrotatably. In this other example, the feed screw mechanism 40 (or 50) that corresponds to the unrotatable arm can be omitted.

Furthermore, in the illustrated example, as an example of means for relatively approaching/separating an engaged portion of the rod 42 with the intermediate member 30 to/from the rotation fulcrum (the support shaft 31), the elongated hole 32 on the intermediate member 30 side and the engagement shaft 42c on the rod 42 side are fitted to each other. However, as another example, an aspect in which an elongated hole is provided on the rod 42 side and an engagement shaft is provided on the intermediate member 30 side, an aspect in which the elongated hole is replaced with a groove, an aspect in which the tip side of the rod 42 and the intermediate member 30 are connected via an elastic body, or the like can be adopted.

In the illustrated example, the feed screw mechanism 40 (or 50) and the electric wires are distributed and inserted through the four hollow sections 11a, 11b, 11c, 11d in each of the first arm 10 and the second arm 20. However, as another example, an aspect in which the feed screw mechanism 40 (or 50), the electric wires, and the like are collectively inserted through a single hollow section, an aspect in which the feed screw mechanism 40 (or 50), the electric wires, and the like are appropriately distributed and inserted through two, three, five, or more of the hollow sections, or the like can be adopted.

In the illustrated example, the direction in which the first arm 10 opposes and rotates with respect to the intermediate member 30 and the direction in which the second arm 20 opposes and rotates with respect to the same intermediate member 30 are orthogonal to each other. However, as another example, it can be configured that the two directions cross at an angle other than the orthogonal angle.

In the illustrated example, the first sensing section 60 and the second sensing section 70 are each constructed of the Hall sensor. However, these first sensing section 60 and second sensing section 70 can be constructed of a single or plural contact-type sensors other than the Hall sensor (for example, limit switches) or non-contact type sensors (for example, phototube switches).

In the illustrated example, feed screw mechanisms, each of which does not have a ball in a feed screw portion, are used as the first and second feed screw mechanisms 40, 50 particularly from a perspective of downsizing of the entire manipulator 1. However, as another example, a so-called ball screw mechanism that has a ball in a feed screw portion can be used as these second screw feed mechanisms 40,50.

### LIST OF REFERENCE NUMERALS

- 1:: Manipulator
- 10:: First arm
- 20:: Second arm
- 30:: Intermediate member
- 31:: Support shaft (rotation fulcrum)
- 32:: Elongated hole
- 40:: First feed screw mechanism
- 41:: Rotational drive section
- 42:: Rod
- 43:: Rotation locking member
- 50:: Second feed screw mechanism
- 51:: Rotational drive section
- 52:: Rod
- 60:: First sensing section
- 70:: Second sensing section

## Claims

1. A manipulator comprising:
a first arm;
an intermediate member rotatably supported on one end side of the first arm;
a second arm supported on the intermediate member; and
a feed screw mechanism, a base end of which is supported by the first arm, and a rod on a tip side of which is engaged with a portion of the intermediate member near a rotation fulcrum of the first arm, wherein
the rod of the feed screw mechanism is advanced/retracted so as to rotate the intermediate member with respect to the first arm.

2. The manipulator according to claim 1 further comprising
a second feed screw mechanism that supports the second arm to cause rotation thereof with respect to the intermediate member in a direction to cross a rotational direction of the first arm, is supported by the second arm, and engages a rod that can be advanced/retracted with a portion of the intermediate member near a rotation fulcrum of the second arm, wherein
the rod of the second feed screw mechanism is advanced/retracted so as to rotate the intermediate member with respect to the second arm.

3. The manipulator according to claim 1 or 2, wherein
an elongated hole is provided in one of the rod and the intermediate member such that an engaged portion of the rod with the intermediate member relatively approaches/separates from the rotation fulcrum in conjunction with advancement/retraction of the rod, and the other of the rod and the intermediate member is provided with a freely movable shaft within the elongated hole.

4. The manipulator according to any one of claims 1 to 3, wherein
each of the first arm and the second arm is formed in a hollow shape and supports the feed screw mechanism therein.

5. The manipulator according to claim 4, wherein
the feed screw mechanism is configured to advance/retract the rod by electric power supplied from an electric wire, and the electric wire is inserted through the first arm, the intermediate member, and the second arm.

6. The manipulator according to any one of claims 1 to 5, wherein
a sensing section for sensing rotation of the intermediate member that opposes the first arm or the second arm is provided.
